# FASCICULE DE BREVET EUROPEEN

(11) **EP 2 481 667 B1**
(45) Date de publication et mention de la délivrance du brevet: **04.03.2015**
(21) Numéro de dépôt: 12305107.0
(22) Date de dépôt: 27.01.2012
(51) Int. Cl.: B64C 1/08, B64C 3/22

(54) **Structure raidie intégrant un orifice**
Versteifte Struktur, die eine Öffnung einschließt
Stiffened structure including an opening

(30) Priorité: 31.01.2011 FR 1150723
(43) Date de publication de la demande: 01.08.2012
(73) Titulaire: Airbus Opérations SAS, 31060 Toulouse (FR)
(72) Inventeur: Messina, Paolo, 31100 Toulouse (FR); Coudouent, Gérard, 31470 Fontenilles (FR); Larroumets, Pierre, 31500 Toulouse (FR); Tonnele, Arnaud, 82600 Mas-Grenier (FR)
(74) Mandataire: Fantin, Laurent

(56) Documents cités:
- GB-A- 555 496
- US-A- 4 230 293
- US-A- 5 262 220

## Description

La présente invention se rapporte à une structure raidie intégrant un orifice.

Un aéronef comprend de nombreuses structures raidies.

Ainsi, on connaît les structures raidies comportant une première série de raidisseurs orientés selon une première direction, par exemple la direction longitudinale de l'aéronef, et une seconde série de raidisseurs orientés selon une seconde direction perpendiculaire à la première. Dans ce cas, la zone délimitée par les raidisseurs appelée également poche ou maille a une forme carrée ou rectangulaire.

On connaît également des structures raidies comportant trois séries de raidisseurs orientés selon des directions à 60°. Ces structures possèdent un comportement isotrope ce qui leur confère des caractéristiques mécaniques recherchées. Ainsi, la demande de brevet FR-2009/0056286 propose un procédé de dimensionnement par méthode analytique de telles structures.

L'état de l'art est également illustré par le document US-A-5,262,220 et notamment par la figure 13 de ce document.

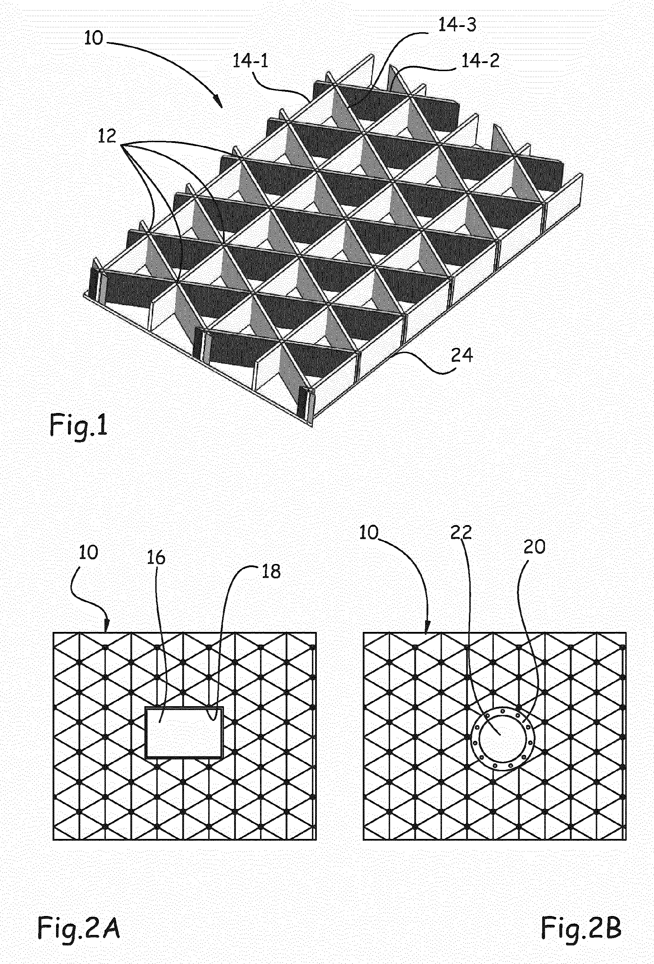

Selon un premier mode de réalisation illustré sur la figure 1, la structure raidie 10 comprend des noeuds 12 au niveau desquels trois raidisseurs 14.1, 14.2, 14.3 de différentes directions se croisent. Avantageusement, les raidisseurs sont orientés selon trois directions formant un angle de 60° entre elles. Dans ce cas, toutes les mailles ont une forme de triangle isocèle. Cette structure est également connue sous le nom de « Isogrid ».

Selon un autre mode de réalisation, la structure comprend des noeuds au niveau desquels seulement deux raidisseurs de directions différentes se croisent. Dans ce cas, la structure comprend des mailles triangulaires et d'autres hexagonales. Elle est connue sous le nom de « Anisogrid ».

La structure de type « Isogrid » offre de meilleures caractéristiques mécaniques notamment en matière de flambage, les mailles de formes hexagonales d'une structure de type « Anisogrid » procurant une moins bonne stabilité et ayant tendance à réduire la résistance au flambage de la structure. Les structures dites « Isogrid » ou « Anisogrid » métalliques sont utilisées dans la réalisation d'un aéronef.

L'invention se rapporte plus particulièrement aux structures raidies de type « Isogrid ».

Selon une application, une structure raidie peut être associée à un panneau. Dans ce cas, la structure raidie est fixée contre une face d'un panneau.

Selon une autre application, la structure raidie peut être utilisée seule. Dans ce cas, l'espace entre les raidisseurs n'est pas obturé par un panneau.

Dans certains cas, ces structures raidies doivent être traversées par un conduit sensiblement parallèle au plan des raidisseurs. Lorsque ce conduit a un diamètre inférieur à une maille et qu'il ne doit pas être relié à la structure raidie cela ne pose aucun problème. De la même manière, lorsque le panneau associé à la structure raidie comprend une ouverture dont le diamètre est inférieur à la maille cela ne pose aucun problème.

Cela devient plus problématique lorsque le conduit (ou l'ouverture) a une section supérieure à la maille et/ou lorsqu'il doit être relié à la structure.

Comme illustré sur la figure 2A, lorsqu'une ouverture rectangulaire 16 est réalisée dans la structure raidie 10, cette dernière comprend un raidisseur périphérique 18 de forme rectangulaire relié aux raidisseurs de la structure raidie. Ces formes d'ouverture et de raidisseur périphérique ne sont pas adaptées pour une structure raidie car elles impactent fortement ses caractéristiques mécaniques.

Comme illustré sur la figure 2B, lorsqu'un conduit traverse la structure raidie 10 ou est relié à la structure raidie, on prévoit un raidisseur ou un anneau périphérique 20 circulaire relié aux raidisseurs de la structure raidie et comprenant un orifice 22. Cette solution permet d'obtenir une meilleure intégration comparée à la solution visible sur la figure 2A.

La présente solution vise à améliorer cette intégration en limitant l'impact d'un orifice dans une structure raidie de type « Isogrid ».

A cet effet, l'invention a pour objet une structure raidie comprenant des raidisseurs et des noeuds au niveau desquels trois raidisseurs de différentes directions se croisent, les faces des raidisseurs étant disposées dans des plans perpendiculaires à un même plan, ladite structure raidie comprenant au moins un orifice et étant **caractérisée en ce que** ledit orifice est entouré par une ceinture hexagonale formées par des raidisseurs périphériques.

D'autres caractéristiques et avantages ressortiront de la description qui va suivre de l'invention, description donnée à titre d'exemple uniquement, en regard des dessins annexés sur lesquels :
- La figure 1 est une vue en perspective d'une structure raidie de type « Isogrid »,
- La figure 2A est une vue de face d'une structure raidie de type « Isogrid » avec une ouverture selon l'art antérieur,
- La figure 2B est une vue de face d'une structure raidie de type « Isogrid » avec un anneau de fixation d'un conduit selon l'art antérieur,
- La figure 3A est une vue de face d'une structure raidie de type « Isogrid » avec un anneau de fixation d'un conduit selon un premier mode de réalisation de l'invention,
- La figure 3B est une coupe de la structure raidie de la figure 3A à laquelle est relié un conduit,
- La figure 4 est une vue de face d'une structure raidie de type « Isogrid » avec un anneau de fixation d'un conduit selon une autre variante de l'invention,
- La figure 5 est une vue de face d'une structure raidie de type « Isogrid » avec une ouverture selon une première variante de l'invention, et
- La figure 6 est une vue de face d'une structure raidie de type « Isogrid » avec une ouverture selon une autre variante de l'invention.

Comme illustré sur la figure 1, une structure raidie 10 comprend des noeuds 12 au niveau desquels trois raidisseurs 14.1, 14.2, 14.3 de différentes directions se croisent. Avantageusement, les raidisseurs sont orientés selon trois directions formant un angle de 60° entre elles. Dans ce cas, toutes les mailles ont une forme de triangle isocèle. Cette structure est également connue sous le nom de « Isogrid ».

Les raidisseurs 14.1, 14.2, 14.3 sont des éléments avec une section rectangulaire dont la largeur est nettement inférieure à la longueur. Les chants des raidisseurs 14.1, 14.2, 14.3 sont disposés dans deux plans parallèles, les faces des raidisseurs étant disposées dans des plans perpendiculaires au même plan.

Pour la suite de la description, on entend par raidisseur un élément avec une section sensiblement rectangulaire dont la largeur est nettement inférieure à la longueur

Selon les variantes, cette structure raidie peut être associée ou non à au moins un panneau 24 fixé contre les chants des raidisseurs 14.1, 14.2, 14.3.

Cette structure raidie peut être métallique ou réalisée en tout autre matériau, comme en matériau composite par exemple.

Cette structure raidie n'est pas plus détaillée car elle est connue de l'homme du métier.

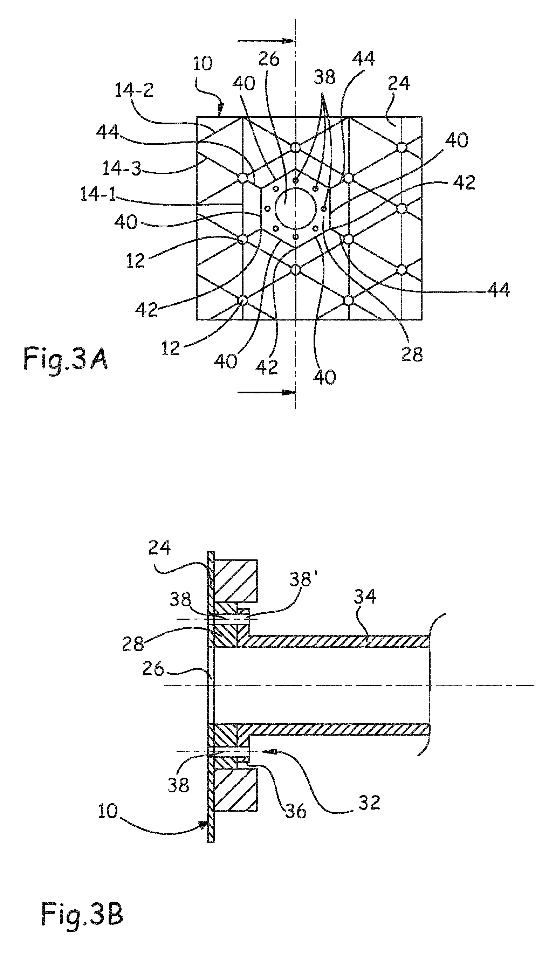

Selon les variantes illustrées sur les figures 3A, 3B, 4 à 6, la structure raidie 10 comprend au moins un orifice 26.

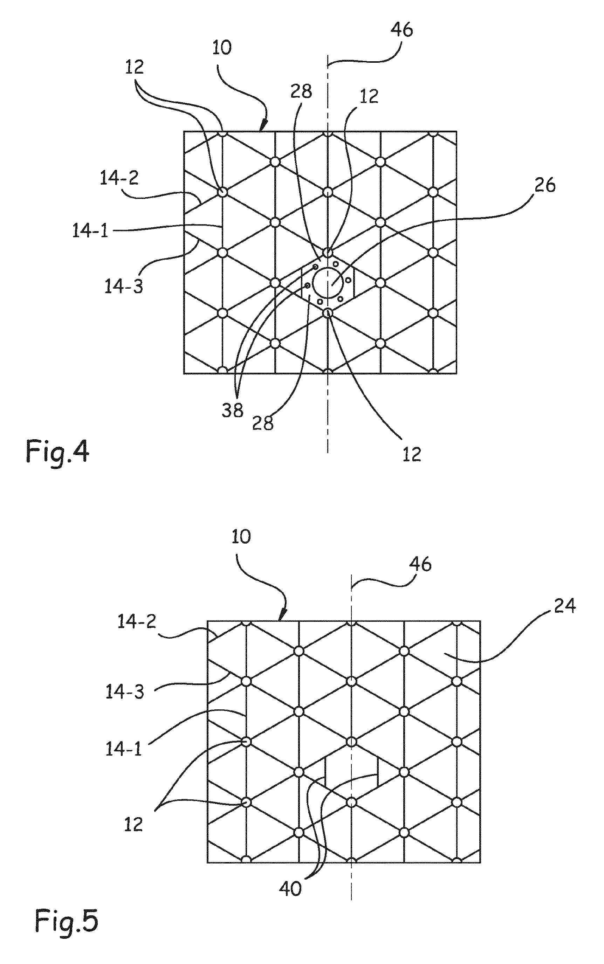

Selon les variantes illustrées sur les figures 3A, 3B et 4, la structure raidie 10 comprend une paroi 28 dans laquelle est ménagé l'orifice 26 qui a une forme circulaire, cette paroi comprenant des moyens 32 de fixation d'au moins un conduit 34 débouchant au niveau de l'orifice 26.

Généralement, cette paroi 28 est disposée dans un plan perpendiculaire aux raidisseurs. Elle est dimensionnée, notamment son épaisseur, pour assurer la transmission des efforts entre le conduit 34 et la structure raidie 10.

Selon un mode de réalisation illustré sur la figure 3B, le conduit 34 comprend à son extrémité une collerette 36 avec une face frontale plaquée contre l'une des faces de la paroi 28.

Selon une application, la paroi 28 peut être intercalée entre deux conduits mis bout à bout, l'orifice 26 assurant la continuité entre l'intérieur des deux conduits. Selon une autre application illustrée sur la figure 3B, l'extrémité d'un seul conduit est plaquée contre l'une des faces de la paroi 28.

Selon un mode de réalisation, les moyens 32 de fixation peuvent se présenter sous la forme de boulons ou rivets traversant la paroi 28 et la ou les collerettes 36 du ou des conduits via respectivement des trous 38 ménagés dans la paroi et des trous 38' ménagés dans la ou les collerettes 36. Les moyens de liaison 32 sont disposés entre l'orifice 26 et la ceinture hexagonale formée par les raidisseur périphériques 40.

Les moyens de fixation, les conduits ne sont pas plus détaillés car ils peuvent prendre de nombreuses configurations.

Selon l'invention, la paroi 28 a une forme périphérique hexagonale et comprend en périphérie des raidisseurs périphériques 40, un pour chaque côté de la forme hexagonale, reliés deux à deux.

De préférence, les raidisseurs périphériques 40 ont la même section que les raidisseurs 14.1, 14.2, 14.3 de la structure raidie 10. Les raidisseurs périphériques sont de préférence disposés selon les trois directions des raidisseurs 14.1, 14.2, 14.3 de la structure raidie 10.

Selon une première variante, illustrée sur la figure 3A, adaptée lorsque le rapport d/a est supérieur ou égal à 1 (d étant le diamètre de l'orifice 26 et a la dimension de la maille ou la longueur d'un raidisseur 14.1, 14.2, 14.3 entre deux noeuds 12), les raidisseurs périphériques 40 sont distincts des raidisseurs 14.1, 14.2, 14.3 de la structure raidie 10. Dans ce cas, chaque jonction 42 des raidisseurs périphériques 40 est reliée au noeud 12 adjacent par un raidisseur secondaire 44. Avantageusement, les raidisseurs secondaires 44 ont la même section que les raidisseurs 14.1, 14.2, 14.3 de la structure raidie 10.

Selon cette variante, les raidisseurs périphériques ont avantageusement la même longueur.

Selon la position de l'orifice 26, les raidisseurs secondaires 44 peuvent être alignés ou non avec les raidisseurs 14.1, 14.2, 14.3 de la structure raidie 10. Selon une autre variante, illustrée sur la figure 4, adaptée lorsque le rapport d/a est inférieur à 1, au moins certains raidisseurs périphériques sont des raidisseurs 14.1, 14.2, 14.3 de la structure raidie 10.

Comme illustré sur la figure 4, quatre raidisseurs périphériques sont des parties de raidisseurs de la structure reliés deux à deux au niveau de noeuds 12 disposés de part et d'autre de l'orifice 26, les paires de parties de raidisseurs étant reliées par deux raidisseurs 40 périphériques spécifiques distincts des raidisseurs 14.1, 14.2, 14.3 de la structure raidie 10. Les deux raidisseurs 40 sont parallèles et disposés de préférence de manière symétrique par rapport à l'axe 46 reliant les noeuds 12 au niveau desquels se croisent les raidisseurs 14.1, 14.2, 14.3 de la structure raidie 10 utilisés comme raidisseurs périphériques.

Dans ce cas, les raidisseurs périphériques 40 ne forment pas nécessairement un hexagone isocèle.

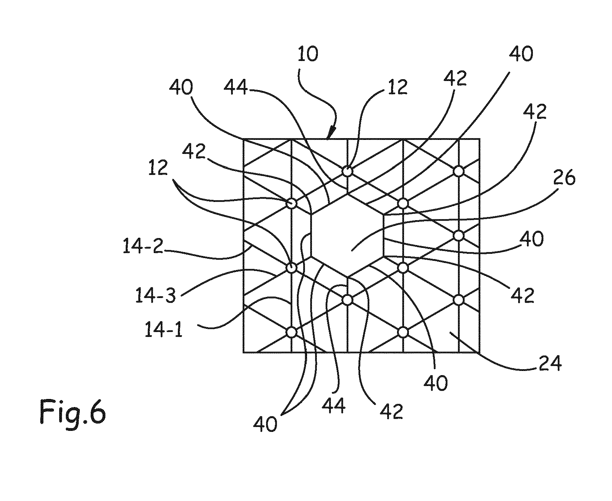

Selon d'autres variantes illustrées sur les figures 5 et 6, l'orifice 26 peut permettre le passage d'un conduit non relié à la structure raidie ou faire communiquer les deux zones séparées par un panneau 24 associé à la structure raidie.

Selon ces variantes, l'orifice 26 est délimité par des raidisseurs périphériques 40 formant un hexagone.

Selon une autre variante, illustrée sur la figure 6, adaptée lorsque le rapport d/a est inférieur à 1, au moins certains raidisseurs périphériques sont des raidisseurs 14.1, 14.2, 14.3 de la structure raidie 10.

Comme illustré sur la figure 5, quatre raidisseurs périphériques sont des parties de raidisseurs de la structure reliés deux à deux au niveau de noeuds 12 disposés de part et d'autre de l'orifice 26, les paires de parties de raidisseurs étant reliées par deux raidisseurs 40 périphériques spécifiques distincts des raidisseurs 14.1, 14.2, 14.3 de la structure raidie 10. Les deux raidisseurs 40 sont parallèles et disposés de préférence de manière symétrique par rapport à l'axe 46 reliant les noeuds 12 au niveau desquels se croisent les raidisseurs 14.1, 14.2, 14.3 de la structure raidie 10 utilisés comme raidisseurs périphériques.

Dans ce cas, les raidisseurs périphériques 40 ne forment pas nécessairement un hexagone isocèle.

Selon une variante, illustrée sur la figure 6, adaptée lorsque le rapport d/a est supérieur ou égal à 1 (d étant le diamètre de l'orifice 26 et a la dimension de la maille ou la longueur d'un raidisseur 14.1, 14.2, 14.3 entre deux noeuds 12), les raidisseurs périphériques 40 sont distincts des raidisseurs 14.1, 14.2, 14.3 de la structure raidie 10. Dans ce cas, chaque jonction 42 des raidisseurs périphériques 40 est reliée au noeud 12 adjacent par un raidisseur secondaire 44. Avantageusement, les raidisseurs secondaires 44 ont la même section que les raidisseurs périphériques 40.

Selon cette variante, les raidisseurs périphériques ont avantageusement la même longueur.

Selon la position de l'orifice 26, les raidisseurs secondaires 44 peuvent être alignés ou non avec les raidisseurs 14.1, 14.2, 14.3 de la structure raidie 10.

Selon toutes les variantes, l'orifice 26 est entouré par des raidisseurs périphériques 40 formant une ceinture hexagonale qui délimite l'orifice 26, comme illustré sur les figures 5 et 6, ou qui rigidifie une paroi 28 dans laquelle est ménagé l'orifice 26, comme illustré sur les figure 3B et 4. La présence de raidisseurs secondaires 44 et leurs agencements autour de l'orifice 26 peut être fonction du ratio d/a et/ou de la position des raidisseurs périphériques 40 par rapport aux autres raidisseurs 14.1, 14.2, 14.3 de la structure raidie 10.

## Revendications

1. Structure raidie comprenant des raidisseurs (14.1, 14.2, 14.3) et des noeuds (12) au niveau desquels trois raidisseurs (14.1, 14.2, 14.3) de différentes directions se croisent, les faces des raidisseurs (14.1, 14.2, 14.3) étant disposées dans des plans perpendiculaires à un même plan, ladite structure raidie comprenant au moins un orifice (26) et étant **caractérisée en ce que** ledit orifice (26) est entouré par une ceinture hexagonale formées par des raidisseurs périphériques (40).

2. Structure raidie selon la revendication 1, **caractérisée en ce que** les raidisseurs périphériques (40) sont distincts des raidisseurs (14.1, 14.2, 14.3) de la structure raidie, chaque jonction (42) de deux raidisseurs périphériques (40) étant reliée au noeud (12) adjacent par un raidisseur secondaire (44).

3. Structure raidie selon la revendication 2, **caractérisée en ce que** les raidisseurs périphériques (40) ont la même longueur.

4. Structure raidie selon la revendication 2 ou 3, **caractérisée en ce que** les raidisseurs secondaires (44) ont la même section que les raidisseurs périphériques (40).

5. Structure raidie selon l'une quelconque des revendications 2 à 4, **caractérisée en ce que** les raidisseurs secondaires (44) sont alignés avec les raidisseurs (14.1, 14.2, 14.3) de la structure raidie.

6. Structure raidie selon la revendication 1, **caractérisée en ce que** la ceinture hexagonale est constituée de deux paires de parties de raidisseurs (14.1, 14.2, 14.3) de la structure raidie, les paires de parties de raidisseurs étant reliées par deux raidisseurs (40) distincts des raidisseurs (14.1, 14.2, 14.3) de la structure raidie (10).

7. Structure raidie selon la revendication 6, **caractérisée en ce que** les raidisseurs (40) de la ceinture périphérique distincts des raidisseurs (14.1, 14.2, 14.3) de la structure raidie (10) sont parallèles et disposés de manière symétrique par rapport à un axe (46) passant par les noeuds (12) au niveau desquels se croisent les raidisseurs (14.1, 14.2, 14.3) de la structure raidie (10) format une partie de la ceinture hexagonale.

8. Structure raidie selon l'une quelconque des revendications précédentes, **caractérisée en ce que** les raidisseurs de la ceinture hexagonale ont la même section que les raidisseurs (14.1, 14.2, 14.3) de la structure raidie (10).

9. Structure raidie selon l'une quelconque des revendications précédentes, **caractérisée en ce qu'**elle comprend une paroi (28) dans laquelle est ménagée l'orifice (26) rigidifier par la ceinture hexagonale.

10. Structure raidie selon la revendication 9, **caractérisée en ce que** des moyens de liaison (32) sont disposés entre l'orifice (26) et la ceinture hexagonale formée par les raidisseur périphériques (40).

## Patentansprüche

1. Versteifte Struktur mit Versteifungen (14.1, 14.2, 14.3) und mit Knoten (12), in denen sich drei Versteifungen (14.1, 14.2, 14.3) aus verschiedenen Richtungen kreuzen, wobei die Seitenflächen der Versteifungen (14.1, 14.2, 14.3) in Ebenen angeordnet sind, die im rechten Winkel zur selben Ebene ausgerichtet sind, und wobei die versteifte Struktur wenigstens eine Öffnung (26) aufweist, **dadurch gekennzeichnet, dass** die Öffnung (26) von einer sechseckigen Fassung umgeben ist, die von umlaufenden Versteifungen (40) gebildet ist.

2. Versteifte Struktur nach Anspruch 1, **dadurch gekennzeichnet, dass** die umlaufenden Versteifungen (40) von den Versteifungen (14.1, 14.2, 14.3) der versteiften Struktur verschieden sind und dass jede Verbindungsstelle (42) von zwei umlaufenden Versteifungen (40) mit dem nächstliegenden Knoten (12) durch eine sekundäre Versteifung (44) verbunden ist.

3. Versteifte Struktur nach Anspruch 2, **dadurch gekennzeichnet, dass** die umlaufenden Versteifungen (40) die gleiche Länge aufweisen.

4. Versteifte Struktur nach Anspruch 2 oder 3, **dadurch gekennzeichnet, dass** die sekundären Versteifungen (44) den gleichen Querschnitt wie die umlaufenden Versteifungen (40) haben.

5. Versteifte Struktur nach einem der Ansprüche 2 bis 4, **dadurch gekennzeichnet, dass** die sekundären Versteifungen (44) auf die Versteifungen (14.1, 14.2, 14.3) der versteiften Struktur ausgerichtet sind.

6. Versteifte Struktur nach Anspruch 1, **dadurch gekennzeichnet, dass** die sechseckige Fassung von zwei Paaren von Teilen der Versteifungen (14.1, 14.2, 14.3) der versteiften Struktur gebildet sind, wobei die Paare von Teilen der Versteifungen durch zwei Versteifungen (40) verbunden sind, die von den Versteifungen (14.1, 14.2, 14.3) der versteiften Struktur (10) verschieden sind.

7. Versteifte Struktur nach Anspruch 6, **dadurch gekennzeichnet, dass** die von den Versteifungen (14.1, 14.2, 14.3) der versteiften Struktur (10) verschiedenen Versteifungen (40) der umlaufenden Fassung parallel sind und symmetrisch bezüglich einer Achse (46) angeordnet sind, die durch die Knoten (12) verläuft, in denen sich die Versteifungen (14.1, 14.2, 14.3) der versteiften Struktur (10) kreuzen, und die einen Teil der sechseckigen Fassung bildet.

8. Versteifte Struktur nach einem der vorhergehenden Ansprüche, **dadurch gekennzeichnet, dass** die Versteifungen der sechseckigen Fassung den gleichen Querschnitt wie die Versteifungen (14.1, 14.2, 14.3) der versteiften Struktur (10) haben.

9. Versteifte Struktur nach einem der vorhergehenden Ansprüche, **dadurch gekennzeichnet, dass** diese eine Wand (28) aufweist, in der die durch die sechseckige Fassung versteifte Öffnung (26) vorgesehen ist.

10. Versteifte Struktur nach Anspruch 9, **dadurch gekennzeichnet, dass** Verbindungsmittel (32) zwischen der Öffnung (26) und der von den umlaufenden Versteifungen (40) gebildeten sechseckigen Fassung angeordnet sind.

## Claims

1. Stiffened structure that comprises stiffeners (14.1, 14.2, 14.3) and nodes (12) at which three stiffeners (14.1, 14.2, 14.3) of different directions intersect, with the surfaces of the stiffeners (14.1, 14.2, 14.3) being arranged in planes that are perpendicular to the same plane, whereby said stiffened structure comprises at least one opening (26) and is **characterized in that** said opening (26) is surrounded by a hexagonal belt, formed by peripheral stiffeners (40).

2. Stiffened structure according to Claim 1, wherein the peripheral stiffeners (40) are separate from the stiffeners (14.1, 14.2, 14.3) of the stiffened structure, with each junction (42) of two peripheral stiffeners (40) being connected to the adjacent node (12) by a secondary stiffener (44).

3. Stiffened structure according to Claim 2, wherein the peripheral stiffeners (40) have the same length.

4. Stiffened structure according to Claim 2 or 3, wherein the secondary stiffeners (44) have the same cross-section as the peripheral stiffeners (40).

5. Stiffened structure according to any of Claims 2 to 4, wherein the secondary stiffeners (44) are aligned with the stiffeners (14.1, 14.2, 14.3) of the stiffened structure.

6. Stiffened structure according to Claim 1, wherein the hexagonal belt consists of two pairs of parts of stiffeners (14.1, 14.2, 14.3) of the stiffened structure, with the pairs of parts of stiffeners being connected by two stiffeners (40) that are separate from the stiffeners (14.1, 14.2, 14.3) of the stiffened structure (10).

7. Stiffened structure according to Claim 6, wherein the stiffeners (40) of the peripheral belt that are separate from the stiffeners (14.1, 14.2, 14.3) of the stiffened structure (10) are parallel and arranged in a symmetrical manner relative to an axis (46) that passes through the nodes (12) at which the stiffeners (14.1, 14.2, 14.3) of the stiffened structure (10) that forms a part of the hexagonal belt intersect.

8. Stiffened structure according to any of the preceding claims, wherein the stiffeners of the hexagonal belt have the same cross-section as the stiffeners (14.1, 14.2, 14.3) of the stiffened structure (10).

9. Stiffened structure according to any of the preceding claims, wherein it comprises a wall (28) in which the opening (26) to be stiffened by the hexagonal belt is made.

10. Stiffened structure according to Claim 9, wherein the connecting means (32) are arranged between the opening (26) and the hexagonal belt formed by the peripheral stiffeners (40).
